# EUROPÄISCHE PATENTSCHRIFT

(11) **EP 3 107 156 B1**
(45) Veröffentlichungstag und Bekanntmachung des Hinweises auf die Patenterteilung: **18.04.2018**
(21) Anmeldenummer: 16173945.3
(22) Anmeldetag: 10.06.2016
(51) Int. Cl.: H01R 13/74

(54) **AUSBAUVORRICHTUNG FÜR EIN KABEL, VERFAHREN ZUM AUSBAU EINES KABELS UNTER VERWENDUNG DER AUSBAUVORRICHTUNG SOWIE KABEL ZUR VERWENDUNG IN DEM VERFAHREN**
REMOVAL DEVICE FOR A CABLE, METHOD FOR REMOVING A CABLE USING THE REMOVAL DEVICE AND CABLE FOR USE IN THE METHOD
DISPOSITIF DE DEMONTAGE D'UN CABLE, PROCEDE DE DEMONTAGE D'UN CABLE A L'AIDE DU DISPOSITIF DE DEMONTAGE ET CABLE UTILISE DANS LE PROCEDE

(30) Priorität: 16.06.2015 EP 15172424
(43) Veröffentlichungstag der Anmeldung: 21.12.2016
(73) Patentinhaber: Kistler Holding AG, 8408 Winterthur (CH)
(72) Erfinder: Christian, Heer, 8400 Winterthur (CH)

(56) Entgegenhaltungen:
- GB-A- 2 505 698

## Beschreibung

### Technisches Gebiet

Die Erfindung betrifft eine Ausbauvorrichtung für ein Kabel nach dem Oberbegriff von Anspruch 1. Die Erfindung betrifft auch ein Verfahren zum Ausbau eines Kabels unter Verwendung der Ausbauvorrichtung.

### Stand der Technik

Kabel sind allgemein bekannt, sie weisen einen oder mehrere Leiter auf, die Leiter können elektrische Leiter oder Lichtleiter sein, die von einem Kabelmantel umgeben sind. Die Leiter dienen der Energieleitung bzw. der Signalleitung.

Die Schrift US2367175A zeigt ein Kabel, das mechanisch in eine Wand einbaubar ist. Das Kabel ist ein Zündkabel mit einem elektrisch abgeschirmten Hochspannungsleiter, die Wand ist eine Zylinderwand eines Motors. Der Einbau des Zündkabels in die Zylinderwand erfolgt über einen Zündstecker. Der Zündstecker ist in die Zylinderwand geschraubt. Eine Ausbauvorrichtung ermöglicht einen Ausbau des Zündkabels. Die Ausbauvorrichtung besteht aus einer Überwurfmutter mit Innengewinde des Zündkabels und einer Hülse mit Aussengewinde des Zündsteckers. Überwurfmutter und Hülse bilden eine lösbare Schraubverbindung. Die Überwurfmutter ist mechanisch starr über eine Klemme mit dem Zündkabel klemmverbunden. Überwurfmutter und Klemme verbinden das Zündkabel mit dem Zündstecker. Zum Ausbau des Zündkabels wird zuerst die Klemmverbindung zwischen Klemme und Zündkabel gelöst und daraufhin wird die Schraubverbindung zwischen Überwurfmutter und Hülse gelöst.

Aus der Schrift EP0338101A1 ist ein Koaxialkabel bekannt, dass mittels einer Überwurfmutter auf einem Anschlussnippel eines Sensors geschraubt ist. Der Sensor wiederum ist über eine Montagehohlschraube in einer Wandbohrung einer Spritzgiessform eingebaut. Zum Ausbau des Koaxialkabels muss also lediglich die Überwurfmutter vom Anschlussnippel geschraubt werden.

Heutzutage bilden Kabel immer öfters mit einem elektrischen Verbraucher oder mit einem Signalgeber eine funktionale Einheit. Eine solche funktionale Einheit wird in der Schrift WO2004081511A1 gezeigt, wo ein Kabel und ein Sensor nicht zerstörungsfrei miteinander verbunden sind und diese funktionale Einheit in eine Wand eines Verbrennungsmotors eingebaut ist.

Ein häufiger Ausbau der Kabel aus der Wand ist aus vielen Gründen notwendig, beispielsweise wenn das Kabel ersetzt oder repariert werden muss, oder wenn die Verbraucher oder Signalgeber mit denen das Kabel einen funktionale Einheit bildet, gereinigt oder repariert werden müssen. Dazu muss eine Ausbaukraft aufgebracht werden. Dieser Ausbau kann zeitaufwändig sein, denn das Kabel, und falls es sich um eine funktionale Einheit handelt, auch der Sensor, kann/können in der Wand festklemmen, beispielsweise durch Verunreinigungen, thermischer Ausdehnung, usw., so dass die Ausbaukraft ein Ziehen, Drehen, Rütteln und Hebeln am Kabel bewirkt. Das Kabel kann so durch mechanische Schläge und ein übermässiges Verdrehen um seine Kabelachse beschädigt werden.

Die Schrift GB2505698A1 offenbart eine Wandbefestigung eines Verkabelungselementes. Dazu ist ein Klemmring aussenseitig auf einen Mantel des Verkabelungselementes geklemmt. Ein Befestigungselement weist eine Klemmbacke, ein Verbindungselement und eine Kappe auf. Durch Aufschrauben der Kappe auf das Verbindungselement wird die Klemmbacke auf den Klemmring geklemmt. Das Verkabelungselement wird somit über Klemmring und Klemmbacke gegen das Verbindungselement gepresst. Das Verbindungselement ist über eine Schraubverbindung mit einer Buchse mit einer Wand befestigt. Durch Losschrauben des Verbindungselements wird das Verkabelungselement aus der Wand ausgebaut.

Eine erste Aufgabe der vorliegenden Erfindung ist es, eine Ausbauvorrichtung für ein Kabel aufzuzeigen, welche einfach und kostengünstig ist. Eine weitere Aufgabe der Erfindung besteht darin, ein Verfahren zum Ausbau eines Kabels anzugeben, welches einen raschen und beschädigungsfreien Ausbau des Kabels aus einer Wand ermöglicht. Schliesslich ist es Aufgabe der Erfindung, ein Kabel zur Verwendung in dem Verfahren aufzuzeigen.

### Darstellung der Erfindung

Zumindest eine dieser Aufgaben wird durch die Merkmale des unabhängigen Anspruchs gelöst.

Die Erfindung betrifft eine Ausbauvorrichtung für ein Kabel zum Ausbau des Kabels aus einer Wand. Das Kabel weist ein Kraftaufnahmeelement auf. Die Ausbauvorrichtung weist ein Hülsenelement auf, das mechanisch mit dem Kraftaufnahmeelement verbunden ist; die Ausbauvorrichtung weist ein Adapterelement auf, das mechanisch mit dem Hülsenelement verbunden ist; die Ausbauvorrichtung weist ein Sicherungselement auf, das mechanisch mit dem Hülsenelement verbunden ist. Das Kabel ist über das Adapterelement mechanisch ausbaubar mit der Wand verbunden. Und der Ausbau des Kabels erfolgt durch Kraftfluss vom Adapterelement über das Sicherungselement auf das Hülsenelement und vom Hülsenelement auf das Kraftaufnahmeelement.

Den Kern der Erfindung bildet eine Ausbauvorrichtung mit einem Hülsenelement, einem Adapterelement und einem Sicherungselement. Und das Kabel weist ein Kraftaufnahmeelement auf, das speziell für die Aufnahme einer Ausbaukraft vorgesehen ist, beispielsweise in dem das Kraftaufnahmeelement für die Aufnahme der Ausbaukraft mechanisch verstärkt ist. Die Teile der Ausbauvorrichtung sind derart zueinander und auf dem Kabel montiert, dass wenn eine Ausbaukraft an der Ausbauvorrichtung angelegt wird, ein Kraftfluss der Ausbaukraft gezielt in das Kraftaufnahmeelement des Kabels fliesst. Zudem sind die Teile der Ausbauvorrichtung derart zueinander und auf dem Kabel montiert, dass sie um eine Achse der Längsrichtung gemeinsam frei drehbar sind. So kann sich das Kabel beim Aufbringen der Ausbaukraft nicht verdrehen.

Die Erfindung betrifft auch ein Verfahren zum Ausbau eines Kabels unter Verwendung der Ausbauvorrichtung.

### Kurze Beschreibung der Zeichnungen

Im Folgenden wird die Erfindung beispielhaft unter Beizug der Figuren näher erklärt. Es zeigen
- Fig. 1: eine Ansicht eines Teils einer bevorzugten Ausführungsform eines Kabels beim Aufschieben eines Hülsenelements einer Ausbauvorrichtung;
- Fig. 2: eine Ansicht des Kabels nach Fig. 1 mit aufgeschobenem Hülsenelement;
- Fig. 3: eine Ansicht des Kabels nach Fig. 2 beim Aufschieben eines Adapterelements einer Ausbauvorrichtung;
- Fig. 4: eine Ansicht des Kabels nach Fig. 3 mit aufgeschobenem Adapterelement;
- Fig. 5: eine Ansicht des Kabels nach Fig. 4 beim Aufschrauben eines Sicherungselements einer Ausbauvorrichtung;
- Fig. 6: eine Ansicht des Kabels nach Fig. 5 mit aufgeschraubtem Sicherungselement;
- Fig. 7: eine Ansicht des Kabels nach Fig. 6 nach dem Einbau in eine Wand; und
- Fig. 8: ein Querschnitt des Kabels nach Fig. 7 mit dem Kraftfluss beim Ausbau des Kabels aus der Wand.

### Wege zur Ausführung der Erfindung

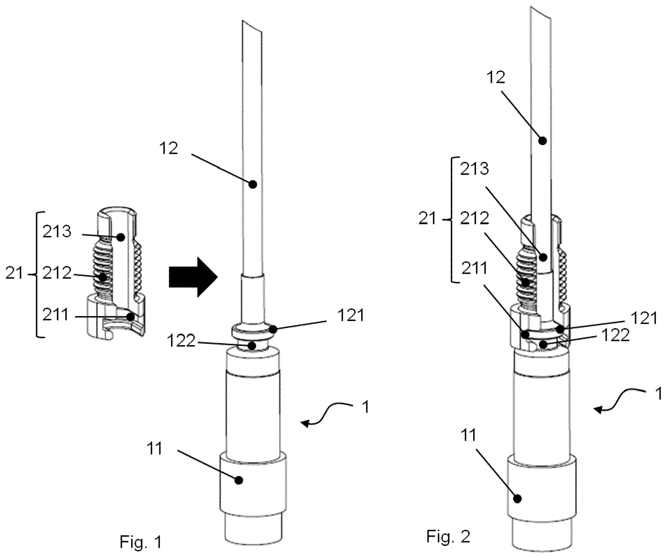

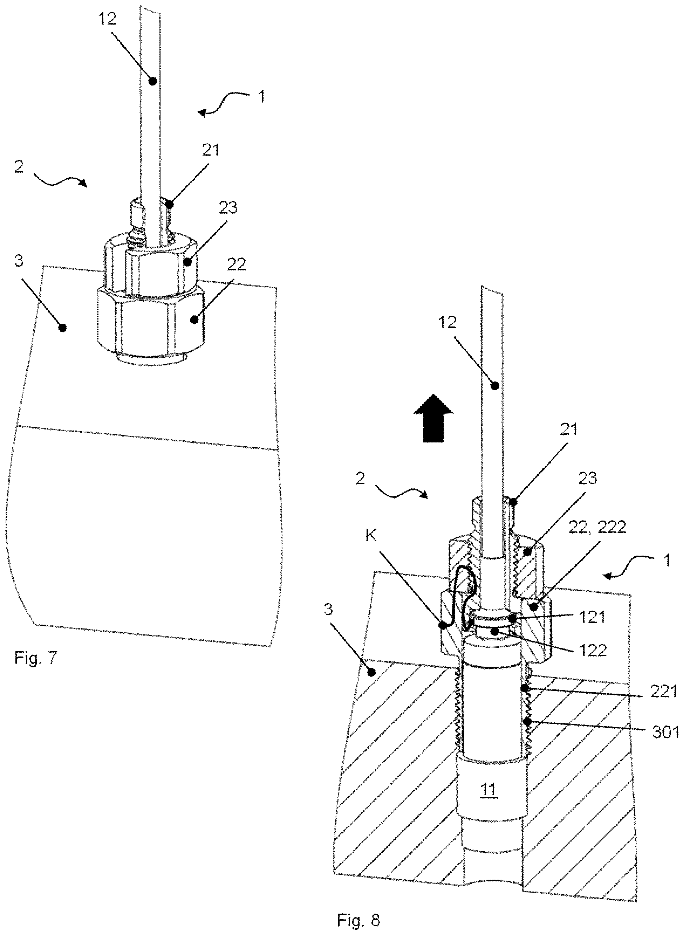

Die Fig. 1 bis 6 zeigen ein Kabel 12 bei der Montage einer Ausbauvorrichtung 2 auf dem Kabel 12. Fig. 7 zeigt das Kabel 12 mit darauf montierter Ausbauvorrichtung 2 nach dem Einbau in eine Wand. Fig. 8 zeigt den Ausbau des Kabels 12 mittels der Ausbauvorrichtung 2 aus der Wand 3.

In der bevorzugten Ausführungsform ist das Kabel 12 Teil einer Sensoranordnung 1 mit einem Sensor 11. Das Kabel 12 und der Sensor 11 bilden eine funktionale Einheit, das Kabel 12 und der Sensor 11 sind nicht zerstörungsfrei verbunden. Das Kabel 12 weist einen oder mehrere nicht dargestellte Leiter auf, die von einem Kabelmantel umgeben sind. Die Leiter dienen der Energieleitung bzw. der Signalleitung sein. Das Adverb "bzw." wird im Sinne der Erfindung als "und/oder" verwendet. Die Leiter können elektrische Leiter aus Metall wie Kupfer, Kupferlegierungen, usw. sein, sie können aber auch Lichtleiter aus Kunststofffasern, Quarzglasfasern, usw. sein. Der Kabelmantel schützt die Leiter vor äusseren Einflüssen. Der Sensor 11 kann ein Aufnehmer einer physikalischen Eigenschaft wie Kraft, Druck, Beschleunigung, Temperatur, usw. sein. Die Verbindung der Leiter mit dem Aufnehmer ist nicht dargestellt. Der Sensor 12 weist einen Sensormantel auf. Der Sensormantel schützt den Aufnehmer vor äusseren Einflüssen. Kabelmantel und Sensormantel können aus elektrischem Isolationsmaterial aus Kunststoff wie Polyethylen, Polyurethan, usw. bestehen. Kabelmantel und Sensormantel können eine elektromagnetische Abschirmung aus Metall wie Stahllegierungen, Aluminiumlegierungen, usw. aufweisen. Kabelmantel und Sensormantel können als mechanischer Schutz rohrförmig oder geflochten sein. Kabelmantel und Sensormantel können wasserdicht, oder gasdicht sein. Die Teile der Sensoranordnung 1 sind kreissymmetrisch bezüglich ihrer länglichen Ausdehnung. Die längliche Ausdehnung von Kabel 12 und Sensor 11 wird Längsrichtung genannt. Die radiale Ausdehnung von Kabel 12 und Sensor 11 wird Radialrichtung genannt.

In der bevorzugten Ausführungsform ist der Aufnehmer ein piezoelektrischer Druckaufnehmer der Anmelderin mit den Typenbezeichnungen 6021, 6023 und 6025. Kabelmantel und Sensormantel sind aus Edelstahl, Stahllegierungen auf Nickelbasis, usw.. Eine solche Sensoranordnung 1 ist in eine Wand 3 einer Maschine wie ein Verbrennungsmotor, eine Turbine, eine Presse, usw. eingebaut.

Die Ausbauvorrichtung 2 weist ein Hülsenelement 21, ein Adapterelement und ein Sicherungselement 23 auf. Hülsenelement 21, Adapterelement und Sicherungselement 23 sind vorzugsweise aus Metall wie Stahllegierungen, Aluminiumlegierungen, usw.. Bei Kenntnis der vorliegenden Erfindung kann der Fachmann auch Kunststoff wie Polyethylen, Polyurethan, usw. als Material für die Ausbauvorrichtung 2 verwenden. Die Teile der Ausbauvorrichtung 2 sind weitgehend kreissymmetrisch bezüglich ihrer länglichen Ausdehnung. Das Adjektiv "weitgehend" wird im Sinne der Erfindung als "grösser/gleich 90%" verwendet.

Für einen Ausbau des Kabels 12 mittels der Ausbauvorrichtung 2 wird die Ausbauvorrichtung 2 vorgängig auf das Kabel 12 montiert und das Kabel 12 mit montierter Ausbauvorrichtung 2 wird in die Wand 3 eingebaut.

In einem ersten Schritt der Montage wird das Hülsenelement 21 mechanisch mit dem Kabel 12 verbunden. Nach Fig. 1 und 2 wird das Hülsenelement 21 auf ein Kraftaufnahmeelement 121 des Kabels 12 geschoben. Bei dieser mechanischen Verbindung handelt es sich um einen ersten Formschluss. Das Kraftaufnahmeelement 121 ist eine mechanische Verstärkung des Kabels 12, das für die Aufnahme der Ausbaukraft ausgelegt ist. Das Kraftaufnahmeelement 121 ist stegförmig. Das Kraftaufnahmeelement 121 erstreckt sich schräg zur Längsrichtung als Steg vorzugsweise um den gesamten äusseren Umfang des Kabelmantels. Das Kraftaufnahmeelement 121 ragt radial einige Millimeter aus der Kabelmanteloberfläche heraus und erstreckt sich einige Millimeter in Längsrichtung. Angrenzend an das Kraftaufnahmeelement 121 ist im äusseren Umfang des Kabelmantels ein Hülsenführungselement 122 angeordnet. Das Hülsenführungselement 122 ist nutförmig. Das Hülsenführungselement 122 erstreckt sich schräg zur Längsrichtung als Nut vorzugsweise um den gesamten äusseren Umfang des Kabelmantels. Kraftaufnahmeelement 121 und Hülsenführungselement 122 sind einstückig mit dem Kabelmantel.

Das Hülsenelement 21 ist ein in Längsrichtung einige Zentimeter langer Hohlzylinder mit einer Zentralbohrung, einer inneren Manteloberfläche und einer äusseren Manteloberfläche. Die innere Manteloberfläche des Hülsenelements 21 weist eine Kontur auf, die weitgehend einer entsprechenden äusseren Manteloberfläche des Kabelmantels entspricht. In einem Bereich der Kontur, die einem Bereich des Kabelmantels mit dem Kraftaufnahmeelement 121 entspricht, weist das Hülsenelement 21 eine Hülsenelementnut 211 auf. Die Hülsenelementnut 211 erstreckt sich schräg zur Längsrichtung als Nut in der inneren Manteloberfläche des Hülsenelements 21. Das Hülsenelement 21 weist auf seiner äusseren Manteloberfläche ein Hülsenelementaussengewinde 212 auf. Das Hülsenelement 21 ist in Längsrichtung mit einem Hülsenelementschlitz 213 geschlitzt. Der Hülsenelementschlitz 213 erstreckt sich über die gesamte Länge des Hülsenelements 21, seine Breite entspricht einem Durchmesser des Kabels 12. Wie in Fig. 1 mit einem Pfeil dargestellt, ist das Hülsenelement 21 zur Bewerkstelligung des ersten Formschlusses von aussen in radialer Richtung über den Hülsenelementschlitz 213 auf das Kabel 12 schiebbar. Das auf das Kabel 12 geschobene Hülsenelement 21 ist in Fig. 2 dargestellt. Das Kraftaufnahmeelement 121 ragt radial in die Hülsenelementnut 211. Ein zum Sensor 11 hin orientiertes Hülsenelementende des Hülsenelements 21 sitzt im Hülsenführungselement 122. Beim ersten Formschluss ist das Hülsenelement 21 um die Achse der Längsrichtung frei drehbar. Das Hülsenführungselement 122 führt das Hülsenelement 21 bei dieser freien Drehbewegung.

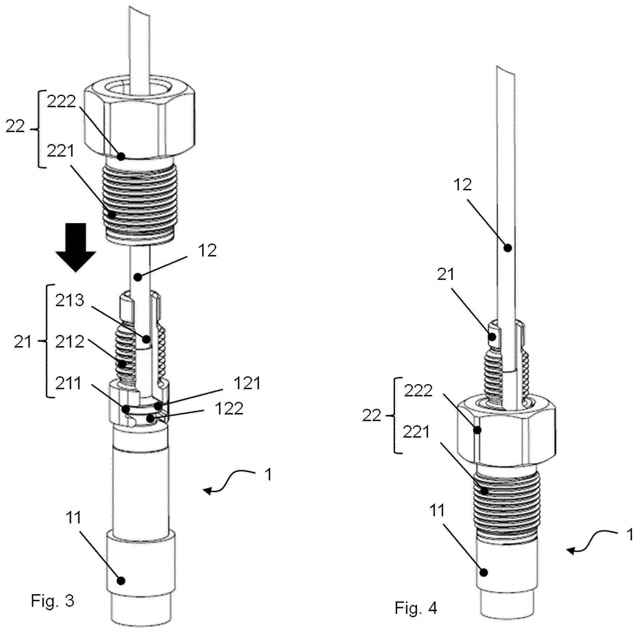

In einem weiteren Schritt der Montage wird das Adapterelement 22 mechanisch mit dem Hülsenelement 21 verbunden. Nach Fig. 3 und 4 wird das Adapterelement 22 auf das Hülsenelement 21 geschoben. Bei dieser mechanischen Verbindung handelt es sich um einen zweiten Formschluss. Das Adapterelement 22 ist ein in Längsrichtung einige Zentimeter langer Hohlzylinder mit einer Zentralbohrung, einer inneren Manteloberfläche und einer äusseren Manteloberfläche. Die äussere Manteloberfläche des Adapterelements 22 weist ein Adapterelementaussengewinde 221 und einen Adapterelementkopf 222 auf. Ein Durchmesser der inneren Manteloberfläche des Adapterelements 22 entspricht weitgehend einem Durchmesser der äusseren Manteloberfläche des Hülsenelements 21. Wie in Fig. 3 mit einem Pfeil dargestellt, ist das Adapterelement 22 zur Bewerkstelligung des zweiten Formschlusses in Längsrichtung über die Zentralbohrung auf das Hülsenelement 21 schiebbar. Das auf das Hülsenelement 21 geschobene Adapterelement 22 ist in Fig. 4 dargestellt. Der zweite Formschluss ist derart, dass Adapterelement 22 und Hülsenelement um die Achse der Längsrichtung gemeinsam frei drehbar sind. Der zweite Formschluss ist durch Formgebung der äusseren Manteloberfläche des Hülsenelements 21 bzw. der inneren Manteloberfläche des Adapterelements 22 bewerkstelligt. So kann eine dieser Manteloberflächen im Durchmesser polygonförmig sein, oder auf einer dieser Manteloberflächen kann ein Stift angeordnet sein, der in eine entsprechende Vertiefung der anderen Manteloberfläche rasten kann. Ein zum Sensor 11 hin orientiertes Adapterelementende des Adapterelements 22 liegt an einem Anschlag des Sensors 11 an, derart, dass das Adapterelement 22 in Längsrichtung nicht über den Sensor 11 rutschen kann. Hülsenelement 21 und Adapterelement 22 sind derart zueinander positioniert, dass das Hülsenelementaussengewinde 212 und das Adapterelementaussengewinde 222 von aussen frei zugänglich sind.

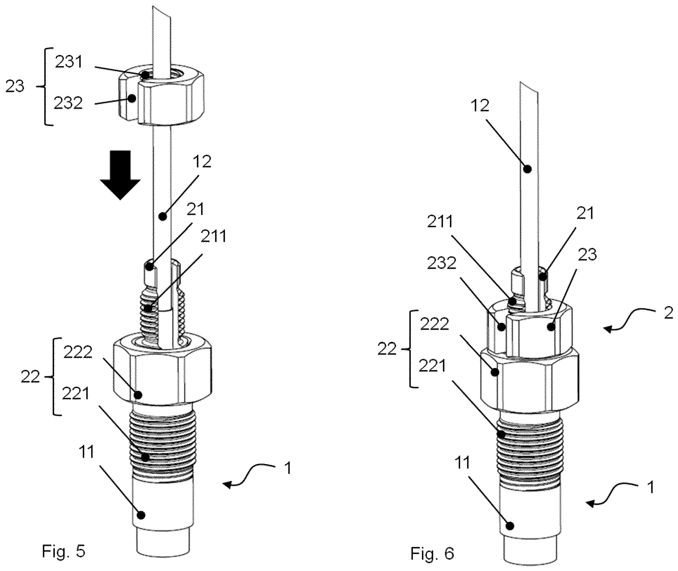

In einem weiteren Schritt der Montage wird das Sicherungselement 23 mechanisch mit dem Hülsenelement 21 verbunden. Nach Fig. 5 und 6 wird das Sicherungselement 23 auf das Hülsenelement 22 geschraubt. Bei dieser mechanischen Verbindung handelt es sich um einen Kraftschluss. Das Sicherungselement 23 ist ein in Längsrichtung einige Zentimeter langer Hohlzylinder mit einer Zentralbohrung, einer inneren Manteloberfläche und einer äusseren Manteloberfläche. Das Sicherungselement 23 ist in Längsrichtung mit einem Sicherungselementschlitz 232 geschlitzt. Der Sicherungselementschlitz 232 erstreckt sich über die gesamte Länge des Sicherungselements 23, seine Breite entspricht einem Durchmesser des Kabels 12. Das Sicherungselement 23 ist von aussen in radialer Richtung über den Sicherungselementschlitz 232 auf das Kabel 12 schiebbar. Die innere Manteloberfläche des Sicherungselements 23 weist ein Sicherungselementinnengewinde 231 auf. Ein Durchmesser der inneren Manteloberfläche des Sicherungselements 23 entspricht weitgehend dem Durchmesser der äusseren Manteloberfläche im Bereich des Hülsenelementaussengewindes 212. Wie in Fig. 5 mit einem Pfeil dargestellt, ist das Sicherungselement 23 zur Bewerkstelligung des Kraftschlusses in Längsrichtung mit dem Sicherungselementinnengewinde 231 auf das Hülsenelementaussengewinde 212 schraubbar. Das auf das Hülsenelement 21 geschraubte Sicherungselement 23 ist in Fig. 6 dargestellt. Der Kraftschluss zwischen Sicherungselement 23 und Hülsenelement 21 ist derart, dass Sicherungselement 23 und Hülsenelement 21 um die Achse der Längsrichtung gemeinsam frei drehbar sind.

Fig. 7 zeigt das mittels der Ausbauvorrichtung 2 in eine Wand 3 eingebaute Kabel 12. Dabei ist das Kabel 12 über das Adapterelementaussengewinde 221 in ein Wandbohrunginnengewinde 301 der Wand 3 geschraubt. Bei dieser mechanischen Verbindung handelt es sich um einen Kraftschluss.

Fig. 8 zeigt den Kraftfluss K beim Ausbau des Kabels 12 mittels der Ausbauvorrichtung 2 aus der Wand 3. Dazu wird beispielsweise mit einem nicht dargestellten Werkzeug wie ein Schraubenschlüssel, usw. eine Ausbaukraft am Adapterelementkopf 222 angelegt. Der Kraftfluss ist als gewundener Pfeil eingezeichnet. Der Kraftfluss K reicht vom Adapterelementkopf 222 über das Sicherungselement 23 auf das Hülsenelement 21 und vom Hülsenelement 21 auf das Kraftaufnahmeelement 121. Die Ausbaukraft schraubt das Kabel 12 über das Adapterelementaussengewinde 221 aus dem Wandbohrunginnengewinde 301 der Wand 3. Wenn nun an der Ausbauvorrichtung 2 zusätzlich gezogen, gedreht, gerüttelt oder gehebelt wird, um das Kabel 12 aus der Wand 3 zu lösen, so kann diese Ausbaukraft zu keinem Verdrehen des Kabels führen, da die Teile der Ausbauvorrichtung 2 um die Achse der Längsrichtung gemeinsam frei drehbar sind.

Bei Kenntnis der vorliegenden Erfindung kann der Fachmann die Ausbauvorrichtung 2 anstatt auf dem Kabel 12 auch auf dem Sensor 11 montieren, und er kann die Ausbauvorrichtung 2 auf dem Kabel 12 und dem Sensor 11 montieren.

### Bezugszeichenliste

- 1: Sensoranordnung
- 2: Ausbauvorrichtung
- 3: Wand
- 11: Sensor
- 12: Kabel
- 121: Kraftaufnahmeelement
- 122: Hülsenführungselement
- 21: Hülsenelement
- 22: Adapterelement
- 23: Sicherungselement
- 211: Hülsenelementnut
- 212: Hülsenelementaussengewinde
- 213: Hülsenelementschlitz
- 221: Adapterelementaussengewinde
- 222: Adapterelementkopf
- 231: Sicherungselementinnengewinde
- 232: Sicherungselementschlitz
- 301: Wandbohrunginnengewinde
- K: Kraftfluss

## Patentansprüche

1. Ausbauvorrichtung (2) für ein Kabel (12) zum Ausbau des Kabels (12) aus einer Wand (3), wobei das Kabel (12) ein Kraftaufnahmeelement (121) aufweist; die Ausbauvorrichtung (2) ein Hülsenelement (21) aufweist, das mechanisch mit dem Kraftaufnahmeelement (121) verbunden ist; die Ausbauvorrichtung (2) ein Adapterelement (22) aufweist, das mechanisch mit dem Hülsenelement (21) verbunden ist; die Ausbauvorrichtung (2) ein Sicherungselement (23) aufweist, das mechanisch mit dem Hülsenelement (21) verbunden ist; das Kabel (12) über das Adapterelement (22) mechanisch ausbaubar mit der Wand (3) verbunden ist; und **dadurch gekennzeichnet dass**, diese Elemente (21, 22, 23) der Ausbauvorrichtung (2) derart zueinander und auf dem Kabel (12) montiert sind, dass der Ausbau des Kabels (12) durch Kraftfluss vom Adapterelement (22) über das Sicherungselement (23) auf das Hülsenelement (21) und vom Hülsenelement (21) auf das Kraftaufnahmeelement (121) erfolgt.

2. Ausbauvorrichtung (2) nach Anspruch 1, **dadurch gekennzeichnet, dass** das Hülsenelement (21) über einen ersten Formschluss mechanisch mit dem Kraftaufnahmeelement (121) verbunden ist; und dass das Hülsenelement (21) beim ersten Formschluss um eine Achse der Längsrichtung frei drehbar ist.

3. Ausbauvorrichtung (2) nach Anspruch 2, **dadurch gekennzeichnet, dass** das Hülsenelement (21) einen Hülsenelementschlitz (213) aufweist; und dass das Hülsenelement (21) zur Bewerkstelligung des ersten Formschlusses von aussen in radialer Richtung über den Hülsenelementschlitz (213) auf das Kraftaufnahmeelement (121) schiebbar ist.

4. Ausbauvorrichtung (2) nach Anspruch 3, **dadurch gekennzeichnet, dass** sich das Kraftaufnahmeelement (121) schräg zur Längsrichtung als Steg um einen äusseren Umfang eines Kabelmantels erstreckt; dass das Hülsenelement (21) eine Hülsenelementnut (211) aufweist; dass sich die Hülsenelementnut (211) schräg zur Längsrichtung als Nut in einer inneren Manteloberfläche des Hülsenelements (21) erstreckt; und dass beim ersten Formschluss das Kraftaufnahmeelement (121) radial in die Hülsenelementnut (211) ragt.

5. Ausbauvorrichtung (2) nach einem der Ansprüche 2 bis 4, **dadurch gekennzeichnet, dass** das Kraftaufnahmeelement (121) ein Hülsenführungselement (122) aufweist; dass sich das Hülsenführungselement (122) schräg zur Längsrichtung als Nut um den äusseren Umfang des Kabelmantels erstreckt; und dass beim ersten Formschluss das Hülsenführungselement (122) das Hülsenelement (21) bei der freien Drehbewegung führt.

6. Ausbauvorrichtung (2) nach einem der Ansprüche 2 bis 5, **dadurch gekennzeichnet, dass** das Adapterelement (22) über einen zweiten Formschluss mechanisch mit dem Hülsenelement (21) verbunden ist; und dass das Adapterelement (22) und das Hülsenelement (21) beim zweiten Formschluss um eine Achse der Längsrichtung gemeinsam frei drehbar sind.

7. Ausbauvorrichtung (2) nach Anspruch 6, **dadurch gekennzeichnet, dass** das Adapterelement (22) eine Zentralbohrung aufweist; und dass das Adapterelement (22) zur Bewerkstelligung des zweiten Formschlusses in Längsrichtung über die Zentralbohrung auf das Hülsenelement (21) schiebbar ist.

8. Ausbauvorrichtung (2) nach einem der Ansprüche 6 oder 7, **dadurch gekennzeichnet, dass** das der zweite Formschluss durch Formgebung der äusseren Manteloberfläche des Hülsenelements (21) bzw. der inneren Manteloberfläche des Adapterelements (22) bewerkstelligt ist.

9. Ausbauvorrichtung (2) nach einem der Ansprüche 6 bis 8, **dadurch gekennzeichnet, dass** das Hülsenelement (21) und Adapterelement (22) sind derart zueinander positioniert, dass ein Hülsenelementaussengewinde (212) und ein Adapterelementaussengewinde (221) von aussen frei zugänglich sind.

10. Ausbauvorrichtung (2) nach einem der Ansprüche 6 bis 9, **dadurch gekennzeichnet, dass** das Sicherungselement (23) über einen Kraftschluss mechanisch mit dem Hülsenelement (21) verbunden ist; und dass das Sicherungselement (23) und das Hülsenelement (21) beim Kraftschluss um eine Achse der Längsrichtung gemeinsam frei drehbar sind.

11. Ausbauvorrichtung (2) nach Anspruch 10, **dadurch gekennzeichnet, dass** das Sicherungselement (23) ein Sicherungselementinnengewinde (231) aufweist; dass das Hülsenelement (21) ein Hülsenelementaussengewinde (212) aufweist; und das Sicherungselement (23) zur Bewerkstelligung des Kraftschlusses in Längsrichtung mit dem Sicherungselementinnengewinde (231) auf das Hülsenelementaussengewinde (212) schraubbar ist.

12. Verfahren zum Ausbau eines Kabels (12) unter Verwendung der Ausbauvorrichtung (2) nach einem der Ansprüche 1 bis 11, **dadurch gekennzeichnet, dass** die Ausbauvorrichtung (2) auf das Kabel (12) montiert wird; und dass das Kabel (12) mit montierter Ausbauvorrichtung (2) in die Wand (3) eingebaut wird.

13. Verfahren nach Anspruch 12, **dadurch gekennzeichnet, dass** das Kabel (12) über ein Adapterelementaussengewinde (221) in ein Wandbohrunginnengewinde (301) der Wand (3) geschraubt wird; dass zum Ausbau des Kabels (12) eine Kraft an einem Adapterelementkopf (222) angelegt wird, welche Kraft das Kabel (12) über das Adapterelementaussengewinde (221) aus dem Wandbohrunginnengewinde (301) der Wand (3) schraubt.

14. Ausbauvorrichtung (2) nach Anspruch 1, **gekennzeichnet durch**, dass das Kraftaufnahmeelement (121), einstückig mit einem Kabelmantel ist.

15. Ausbauvorrichtung nach Anspruch 14, **dadurch gekennzeichnet, dass** das Kabel (12) und ein Sensor (11) eine funktionale Einheit bilden.

## Claims

1. A dismounting device (2) for a cable (12) for dismounting the cable (12) from a wall (3) wherein the cable (12) comprises a force receiving member (121); the dismounting device (2) comprises a sleeve member (21) that is mechanically connected to the force receiving member (121); the dismounting device (2) comprises an adapter member (22) that is mechanically connected to the sleeve member (21); the dismounting device (2) comprises a securing member (23) that is mechanically connected to the sleeve member (21); said cable (12) being connected to the wall (3) via the adapter member (22) in a mechanically dismountable manner; and **characterized in that** said members (21, 22, 23) of the dismounting device (2) are mounted relative to each other and on the cable (12) in a way that dismounting of the cable (12) occurs by a flow of force from the adapter member (22) via the securing member (23) onto the sleeve member (21) and from the sleeve member (21) onto the force receiving member (121).

2. The dismounting device (2) according to claim 1, **characterized in that** the sleeve member (21) is mechanically connected to the force receiving member (121) by means of a first form closure; and when the first form closure is made the sleeve member (21) is freely rotatable around an axis of the longitudinal direction.

3. The dismounting device (2) according to claim 2, **characterized in that** the sleeve member (21) includes a sleeve member slit (213); and to achieve the first form closure the sleeve member (21) can be slid onto the force receiving member (121) from the outside in a radial direction via the sleeve member slit (213).

4. The dismounting device (2) according to claim 3, **characterized in that** the force receiving member (121) extends as a rib at an angle to the longitudinal direction around an outer periphery of a cable sheath; the sleeve member (21) comprises a sleeve member groove (211); the sleeve member groove (211) extends as a groove at an angle to the longitudinal direction in an inner sheath surface of the sleeve member (21); and when the first form closure is made the force receiving member (121) projects radially into the sleeve member groove (211).

5. The dismounting device (2) according to any of the claims 2 to 4, **characterized in that** the force receiving member (121) comprises a sleeve guide member (122); the sleeve guide member (122) extends as a groove at an angle to the longitudinal direction around the outer periphery of the cable sheath; and when the first form closure is made the sleeve guide member (122) guides the sleeve member (21) during the free rotation.

6. The dismounting device (2) according to any of the claims 2 to 5, **characterized in that** the adapter member (22) is mechanically connected to the sleeve member (21) by means of a second form closure; and when the second form closure is made the adapter member (22) and the sleeve member (21) are freely rotatable together around an axis of the longitudinal direction.

7. The dismounting device (2) according to claim 6, **characterized in that** the adapter member (22) includes a central bore; and for making the second form closure the adapter member (22) can be slid in the longitudinal direction onto the sleeve member (21) via the central bore.

8. The dismounting device (2) according to any of the claims 6 or 7, **characterized in that** the second form closure is achieved due to the shapes of the outer sheath surface of the sleeve member (21) and the inner sheath surface of the adapter member (22).

9. The dismounting device (2) according to any of the claims 6 to 8, **characterized in that** the sleeve member (21) and the adapter member (22) are positioned with respect to each other such that a sleeve member external thread (212) and an adapter member external thread (221) are freely accessible from the outside.

10. The dismounting device (2) according to any of the claims 6 to 9, **characterized in that** the securing member (23) is mechanically connected to the sleeve member (21) by means of force closure; and when the force closure is made the securing member (23) and the sleeve member (21) are freely rotatable together around an axis of the longitudinal direction.

11. The dismounting device (2) according to claim 10, **characterized in that** the securing member (23) comprises a securing member internal thread (231); the sleeve member (21) comprises a sleeve member external thread (212); and to achieve the force closure the securing member (23) can be screwed in the longitudinal direction via the securing member internal thread (231) onto the sleeve member external thread (212).

12. A method for dismounting a cable (12) using the dismounting device (2) according to any of the claims 1 to 11, **characterized in that** the dismounting device (2) is assembled on the cable (12); and the cable (12) with the dismounting device (2) assembled thereon is mounted in the wall (3).

13. The method according to claim 12, **characterized in that** the cable (12) is screwed into a mounting hole internal thread (301) of the wall (3) via an adapter member external thread (221); for dismounting the cable (12) a force is applied at an adapter member head (222) which force screws the cable (12) out of the mounting hole internal thread (301) of the wall (3) via the adapter member external thread (221).

14. The dismounting device (2) according to claim 1, **characterized in that** the force receiving member (121) is formed integrally with a cable sheath.

15. The dismounting device (2) according to claim 14, **characterized in that** said cable (12) and a sensor (11) form a functional entity.

## Revendications

1. Dispositif de démontage (2) d'un câble (12) pour démonter ledit câble (12) d'une paroi (3) dans lequel ledit câble (12) comprend un élément (121) capteur de force; ledit dispositif de démontage (2) comprenant un élément (21) de manchon relié mécaniquement à l'élément (121) capteur de force; ledit dispositif de démontage (2) comprenant un élément (22) d'adaptateur relié mécaniquement à l'élément de manchon (21); ledit dispositif de démontage (2) comprenant un élément (23) de fixation relié mécaniquement à l'élément (21) de manchon; ledit câble (12) étant relié à la paroi (3) par l'élément (22) d'adaptateur de manière d'être mécaniquement démontable; et **caractérisé en ce que** lesdits éléments (21, 22, 23) du dispositif de démontage (2) sont montés l'un par rapport à l'autre et sur le câble (12) de telle manière que le démontage du câble (12) se réalise par un flux de force de l'élément (22) d'adaptateur à travers l'élément (23) de fixation sur l'élément (21) de manchon et de l'élément (21) de manchon sur l'élément (121) capteur de force.

2. Dispositif de démontage (2) selon la revendication 1 **caractérisé en ce que** l'élément (21) de manchon est relié mécaniquement à l'élément (121) capteur de force par voie d'une complémentarité de forme première; et **en ce que** lorsque la fermeture par complémentarité de forme première est obtenue l'élément (21) de manchon est susceptible de tourner librement autour d'un axe dans la direction longitudinale.

3. Dispositif de démontage (2) selon la revendication 2 **caractérisé en ce que** l'élément (21) de manchon comprend une fente (213) de l'élément de manchon; et **en ce que** pour obtenir la fermeture par complémentarité de forme première, l'élément (21) de manchon peut être coulissé de l'extérieur dans une direction radiale sur l'élément (121) capteur de force par la fente (213) de l'élément de manchon.

4. Dispositif de démontage (2) selon la revendication 3 **caractérisé en ce que** l'élément (121) capteur de force s'étend en forme d'une nervure obliquement par rapport à la direction longitudinale autour d'une périphérie extérieure d'une gaine de câble; l'élément (21) de manchon comprend une rainure (211) de l'élément de manchon; ladite rainure (211) de l'élément de manchon s'étendant en forme d'une rainure obliquement par rapport à la direction longitudinale dans une surface intérieure de l'élément (21) de manchon; et **en ce que** lorsque la fermeture par complémentarité de forme première est obtenue l'élément (121) capteur de force fait saillie radialement dans la rainure (211) de l'élément de manchon.

5. Dispositif de démontage (2) selon l'une quelconque des revendications 2 à 4 **caractérisé en ce que** l'élément (121) capteur de force comprend un élément (122) de guidage de manchon; ledit élément (122) de guidage de manchon s'étendant en forme d'une rainure obliquement par rapport à la direction longitudinale autour d'une périphérie extérieure de la gaine de câble; et **en ce que** lorsque la fermeture par complémentarité de forme première est obtenue l'élément (122) de guidage de manchon guide l'élément (21) de manchon pendant le mouvement de rotation libre.

6. Dispositif de démontage (2) selon l'une quelconque des revendications 2 à 5 **caractérisé en ce que** l'élément (22) d'adaptateur est relié mécaniquement à l'élément (21) de manchon par voie d'une complémentarité de forme seconde; et **en ce que** lorsque la fermeture par complémentarité de forme seconde est obtenue l'élément (22) d'adaptateur et l'élément (21) de manchon peuvent tourner librement ensemble autour d'un axe dans la direction longitudinale.

7. Dispositif de démontage (2) selon la revendication 6 **caractérisé en ce que** l'élément (22) d'adaptateur comprend un alésage central; et **en ce que** pour obtenir la fermeture par complémentarité de forme seconde l'élément (22) d'adaptateur peut être coulissé sur l'élément (21) de manchon dans la direction longitudinale par l'alésage central.

8. Dispositif de démontage (2) selon l'une quelconque des revendications 6 ou 7 **caractérisé en ce que** ladite complémentarité de forme seconde est obtenue grâce aux formes de la surface extérieure de l'élément (21) de manchon de la surface intérieure de l'élément (22) d'adaptateur.

9. Dispositif de démontage (2) selon l'une quelconque des revendications 6 à 8 **caractérisé en ce que** l'élément (21) de manchon et l'élément (22) d'adaptateur sont disposés l'un par rapport à l'autre de manière qu'un filetage externe (212) de l'élément de manchon et un filetage externe (221) de l'élément d'adaptateur sont librement accessibles de l'extérieur.

10. Dispositif de démontage (2) selon l'une quelconque des revendications 6 à 9 **caractérisé en ce que** l'élément (23) de fixation est relié mécaniquement à l'élément (21) de manchon par une fermeture par adhérence; et **en ce que** lorsque ladite fermeture par adhérence est obtenue l'élément (23) de fixation et l'élément (21) de manchon peuvent tourner librement ensemble autour d'un axe dans la direction longitudinale.

11. Dispositif de démontage (2) selon la revendication 10 **caractérisé en ce que** l'élément (23) de fixation comprend un filetage interne (231) de l'élément de fixation; ledit élément (21) de manchon comprend un filetage externe (212) de l'élément de manchon; et pour obtenir la fermeture par adhérence l'élément (23) de fixation peut être vissé dans la direction longitudinale sur le filetage externe (212) de l'élément de manchon par le filetage interne (231) de l'élément de fixation.

12. Procédé pour le démontage d'un câble (12) utilisant le dispositif de démontage (2) selon l'une quelconque des revendications 1 à 11 **caractérisé en ce que** ledit dispositif de démontage (2) est monté sur le câble (12); et **en ce que** le câble (12) avec ledit dispositif de démontage (2) monté sur ce dernier est installé dans la paroi (3).

13. Procédé selon la revendication 12 **caractérisé en ce que** le câble (12) est vissé dans un filetage interne (301) du trou de montage de la paroi (3) par un filetage externe (221) de l'élément d'adaptateur; **en ce que** pour le démontage du câble (12) une force est appliquée sur une tête (222) de l'élément d'adaptateur, ladite force permettant de dévisser ledit câble (12) du filetage interne (301) du trou de montage de la paroi (3) par le filetage externe (221) de l'élément d'adaptateur.

14. Dispositif de démontage (2) selon la revendication 1 **caractérisé en ce que** l'élément (121) capteur de force est d'un seul tenant avec une gaine du câble.

15. Dispositif de démontage (2) selon la revendication 14 **caractérisé en ce que** ledit câble (12) et un capteur (11) constituent une entité fonctionnelle.
